# EUROPÄISCHE PATENTSCHRIFT

(11) **EP 1 330 951 B1**
(45) Veröffentlichungstag und Bekanntmachung des Hinweises auf die Patenterteilung: **24.08.2005**
(21) Anmeldenummer: 03000538.3
(22) Anmeldetag: 09.01.2003
(51) Int. Cl.: A01K 5/00, B01F 7/24, B01F 15/00

(54) **Futtermischer**
Apparatus for mixing feed
Appareil mélangeur de fourrage

(30) Priorität: 29.01.2002 DE 20201339 U
(43) Veröffentlichungstag der Anmeldung: 30.07.2003
(73) Patentinhaber: Trioliet Mullos B.V., 7575 BE Oldenzaal (NL)
(72) Erfinder: Van der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- DE-A- 19 829 867
- DE-U- 20 012 862
- US-A- 5 240 321

## Beschreibung

Die Erfindung bezieht sich auf einen Futtermischer der im Oberbegriff von Anspruch 1 erläuterten Art.

Ein derartiger Futtermischer ist aus der DE-U 200 12 862 bekannt. Bei diesem Futtermischer sind in der Mischkammer zwei oder noch mehr um eine vertikale Achse, bevorzugt gleichsinnig, rotierend angetriebene Mischschnecken angeordnet. Die Vertikalmischschnecken weisen eine Aufnahmekante auf, die am unteren Ende des Schneckenganges angeordnet ist und das Futter schaufelähnlich vom Boden der Mischkammer aufnimmt. Die Schneckengänge der Vertikalmischschnecken werden von der Aufnahmekante weg nach oben hin immer schmaler, so dass nach oben hin immer weniger Platz für die Aufnahme des Futters bleibt. Das Futter wird somit von der Aufnahmekante am Boden aufgenommen und durch die Drehung der Vertikalschnecken nach oben transportiert und fällt wegen des immer schmaler werdenden Schneckengangs nach und nach wieder nach unten, so dass sich eine gute Durchmischung ergibt. Die Vertikalschnecken sind so eng benachbart zueinander angeordnet, dass sie einen möglichst großen Bereich des Bodens überstreichen, so dass die Anzahl der toten Winkel, in denen Futter liegen bleiben könnte, weitgehend reduziert wird. Beim bekannten Futtermischer werden die Zwickel zwischen benachbarten Vertikalschnecken und der meist geradlinig verlaufenden Wand der Mischkammer, die durch die Flugkreise keiner der Vertikalschnecken überstrichen werden kann, durch zweckmäßig ausgeformte Leitkegel abgedeckt, an denen das Futter von der einen Vertikalschnecke nach oben geschoben wird und beim oder vor dem Erreichen der Spitze des Leitkegels auf die andere Vertikalschnecke von oben her abgeworfen wird. Eine weitere Übergabemöglichkeit besteht in demjenigen Bereich, in dem sich die von der Aufnahmekante überstrichenen Flugkreise benachbarter Vertikalschnecken berühren. Dort ist die Übergabe von Futter jedoch problematisch; im Extremfall kann es geschehen, dass an dieser Stelle das Futter nur zwischen benachbarten Vertikalschnecken hin- und hergeschoben und nicht in Richtung auf die Futterausgabeöffnung gefördert wird. Weiterhin kann sich im Übergangsbereich zwischen den beiden Vertikalschnecken eine Art Hülle aus Futter aufbauen, die das Abschleudem vom Schneckengang einer Vertikalschnecke auf die andere Vertikalschnecke unter Wirkung der Zentrifugalkräfte durch die Schneckenrotation verhindert.

Die US-A-5 240 321 beschreibt einen Futtermischer mit einer Mischkammer und einer Vielzahl von Mischschnecken, die sich vertikal vom Boden erstrecken. Die Mischkammer enthält eine Futterausgabeöffnung, in deren Richtung das Futter durch die Mischschnecke gefördert werden soll. Um den Futterfluss in Richtung auf die Futterausgabeöffnung zu verbessern, sind die Drehachsen der Mischschnecken in Richtung auf die Ausgabeöffnung geneigt. Dies kann in einem Ausführungsbeispiel durch ein Anheben der Mischkammer an der der Ausgabeöffnung entgegengesetzten Seite oder in einem weiteren Ausführungsbeispiel durch eine Schräglagerung der Drehachsen der Mischschnecken in einer horizontal verbleibenden Mischkammer erfolgen. Durch die Schräglagerung der Mischschnecken bildet sich eine Bodenstufe, die jedoch so angeordnet ist, dass sie als Hindernis für den Förderfluss wirkt, d.h. das in Förderrichtung ankommende Futter abweist. Darüber hinaus ist die Stufe radial innerhalb eines Flugkreises einer Aufnahmekante der Mischschnecke angeordnet und befindet sich nahe der Drehachse unterhalb der jeweiligen Mischschnecke.

Der Erfindung liegt somit die Aufgabe zugrunde, einen Futtermischer zu schaffen, bei dem die Futterübergabe zwischen zwei Vertikalschnecken optimiert ist.

Die Aufgabe wird durch die im Anspruch 1 angegebenen Merkmale gelöst.

Durch die erfindungsgemäße Ausgestaltung wird sichergestellt, dass sich das Futter im Übergangsbereich nicht entgegen der vorher definierten Förderrichtung in Richtung auf die Futterausgabeöffnung bewegen kann, ohne dass daher das Mischergebnis und die Bewegung des Futters in Förderrichtung gestört wird.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: eine schematische Darstellung eines ersten Ausführungsbeispiels eines erfindungsgemäßen Futtermischers im Längsschnitt,
- Fig. 2: eine schematische Darstellung eines weiteren Ausführungsbeispiels eines erfindungsgemäßen Futtermischers im Längsschnitt,
- Fig. 3: eine schematische Darstellung eines weiteren Ausführungsbeispiels eines erfindungsgemäßen Futtermischers im Querschnitt,
- Fig. 4: die Ansicht IV-IV aus Fig. 3, und
- Fig. 5A,B,C,D: eine schematische Darstellung eines weiteren Ausführungsbeispiels eines erfindungsgemäßen Futtermischers im Querschnitt in vier verschiedenen Arbeitsphasen.

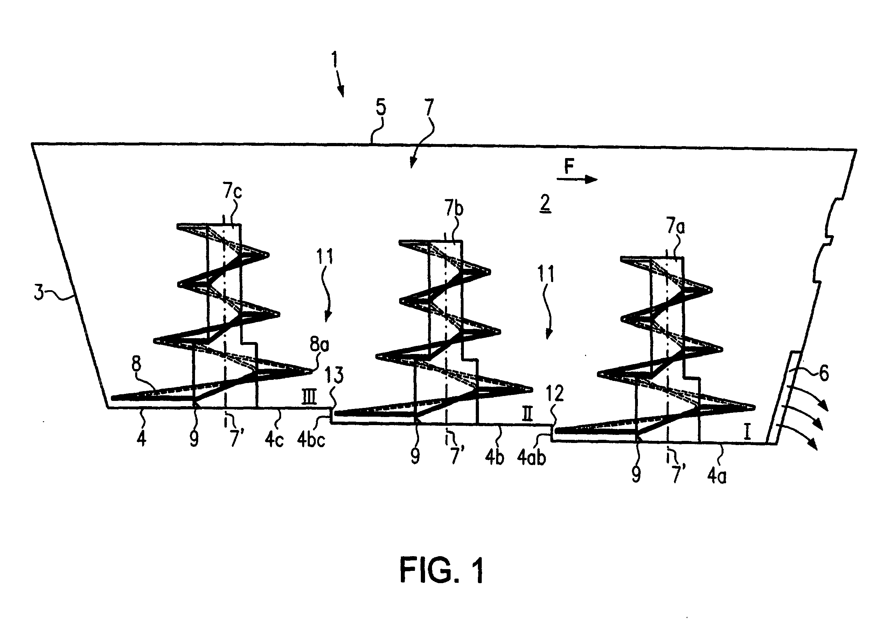

Fig. 1 zeigt einen Längsschnitt durch ein erstes Ausführungsbeispiel eines erfindungsgemäß ausgebildeten Futtermischers 1. Der Futtermischer 1 ist bevorzugt als üblicher Futterwagen ausgebildet, der entlang einer Stallgasse verfahren werden kann und dabei Futter in Form eines Schwads ausgibt. Derartige Futtermischer weisen eine Futterkammer 2 auf, die von Wänden 3 und einem Boden 4 gebildet wird sowie eine obere Öffnung 5 aufweist, über die Futter in das Innere der Mischkammer 2 eingebracht wird. Das Futter kann die Mischkammer 2 über eine Entladeöffnung 6 an der in Fahrtrichtung vorderen oder hinteren Wand verlassen; sie ist jedoch bevorzugt, der besseren Einsichtnahme durch den Schlepperfahrer wegen, an der vorderen Querwand des Futtermischers 1 vorgesehen.

Im Inneren der Mischkammer 2 sind eine Mehrzahl von Mischschnecken 7 angeordnet, die jeweils um eine vertikale Achse 7' durch bekannte, nicht gezeichnete Antriebsmittel rotierend antreibbar sind. Jede der Vertikalschnecken 7 enthält einen Schneckengang 8, der mit einer Aufnahmekante 9 auf den Boden 4 schleift oder sich im geringen Abstand zu diesem bewegt. Die Aufnahmekante 9 ist so ausgebildet, dass sie das auf dem Boden 4 liegende Futter schaufelartig aufnehmen kann.

Die Förderbreite des Schneckenganges 8 nimmt von der Aufnahmekante 9 am Boden 4 nach oben in Richtung auf die Öffnung 5 ab, so dass jede Vertikalschnecke 7 ein im Wesentlichen konisch nach oben zulaufendes Profil zeigt. Auf diese Weise ist der auf den Boden 4 projizierte Flugkreis des radial äußersten Punktes der Aufnahmekante 9 größer als die Flugkreise aller anderen Punkte auf dem radial äußeren Umfang 8a des Schneckenganges 8.

Die Vertikalschnecken 7 sind in einer Reihe hintereinander angeordnet, wobei bei der Verwendung von drei Vertikalmischschnecken 7, wie im dargestellten Ausführungsbeispiel, die Vertikalschnecke 7a direkt an der Ausgabeöffnung 6 und die Vertikalschnecke 7c am von der Ausgabeöffnung 6 am weitesten entfernten Punkt der Mischkammer 2 angeordnet ist, wobei je nach Größe der Mischkammer 2 noch eine oder mehrere Vertikalschnecken 7b dazwischen angeordnet sein können.

Alle Vertikalschnecken 7 sind gleichsinnig gewendelt und werden durch nicht gezeigte Antriebsmittel in üblicher Weise gleichsinnig und bevorzugt mit gleicher Geschwindigkeit angetrieben, um eine bevorzugte Förderrichtung F in Richtung auf die Ausgabeöffnung 6 zu erzeugen. Dabei wird das Futter in Übergangsbereichen 11, in denen die Verbindung zwischen zwei benachbarten Vertikalschnecken dafür offen ist, von einer auf die andere Vertikalschnecke übergeben.

Im dargestellten Ausführungsbeispiel befinden sich die Aufnahmekanten 9 bei allen drei Vertikalschnecken 7a, 7b, 7c am gleichen Punkt ihrer Umlaufbahn um die Vertikalachse 7', dies muss jedoch bei diesem Ausführungsbeispiel nicht sein.

Der Futtermischer 1 weist einen abgestuften Boden mit drei höhengestaffelten Ebenen I, II und III auf, wobei die in Richtung der Schwerkraft tiefste Ebene I an die Futterausgabeöffnung 6 angrenzt und die höchste Ebene III an dem der Ausgabeöffnung 6 am weitesten entfernten Bereich der Mischkammer 2 vorgesehen ist. Jede Ebene I, II, III weist eine Bodenfläche 4a, 4b und 4c auf, die nicht viel größer als der Flugkreis der Aufnahmekante 9 derjenigen Vertikalschnecke 7 ist, die auf der entsprechenden Ebene I, II und III umläuft. Die Bodenflächen 4a und 4b bzw. 4b und 4c sind über Stufen 4ab, 4bc miteinander verbunden, die eine in Richtung auf die tieferliegende Ebene I bzw. II weisende Abweisfläche 12 bzw. 13 tragen. Jede Abweisfläche 12, 13 erstreckt sich um den Flugkreis der jeweils tieferliegenden Vertikalschnecke 7 über zumindest den Übergangsbereich 11, ist entsprechend des Flugkreises der tieferliegenden Vertikalschnecke 7 gekrümmt und liegt auf oder geringfügig außerhalb des Flugkreises der tieferliegenden Vertikalschnecke 7. Die vertikale Höhe jeder Abweisfläche 12, 13 entspricht etwa dem vertikalen Abstand eines Punktes auf dem Umfang des Schneckenganges 8, der bei der Drehung der Vertikalschnecke 7 dann gerade in den Übergangsbereich 11 eintritt, wenn die Aufnahmekante 9 den Übergangsbereich 11 gerade verlässt. Auf diese Weise verhindern die Abweisflächen 12 und 13, dass Futter entgegen der bevorzugten Förderrichtung F von einer tieferliegenden Ebene I, II auf eine höherliegende Ebene II, III zurückgefördert wird, während das Futter in Förderrichtung F selbstverständlich über alle drei Ebenen in Richtung auf die Ausgabeöffnung 6 ungehindert gefördert werden kann.

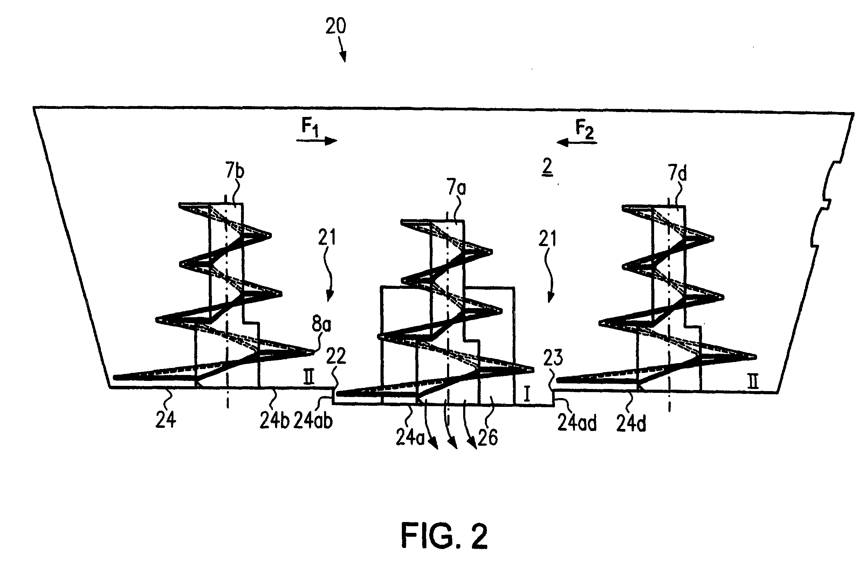

Fig. 2 zeigt ein weiteres Ausführungsbeispiel eines Futtermischers 20, bei dem das Prinzip des Futtermischers 1 auf einen Futtermischer mit seitlich und mittig angeordneter Ausgabeöffnung 26 angewandt wird. Wiederum sind drei der bereits beschriebenen Vertikalschnecken 7 vorgesehen, wobei eine Vertikalschnecke 7a unmittelbar an der Ausgabeöffnung 26 und die anderen beiden Vertikalmischschnecken 7b und 7d beidseitig der ersten Förderschnecke 7a in entfernteren Bereichen der Mischkammer 2 angeordnet sind. Der Antrieb der Vertikalmischschnecken 7a, 7b, 7d erfolgt durch übliche Maßnahmen derart, dass zwei bevorzugte Förderrichtungen F₁ von der Vertikalmischschnecke 7b auf die Vertikalmischschnecke 7a, und F₂ von der Vertikalmischschnecke 7d auf die Vertikalschnecke 7a definiert werden.

Der Boden 24 der Mischkammer 2 enthält zwei Höhenebenen I und II, wobei die der Ausgabeöffnung 26 am nächsten liegende Höhenebenen I am tiefsten und die von der Ausgabeöffnung 26 entfernten Höhenebenen II höher liegen. Auf diese Weise werden wiederum die drei Bodenbereiche 24a, 24b und 24c für jeweils eine der Vertikalschnecken ausgebildet, wobei die Bodenfläche 24a mit jeder der Bodenflächen 24b, 24c eine Stufe 24ab und 24ac ausbildet, die jeweils eine Abweisfläche 22, 23 tragen. Bodenbereiche 24a, 24b und 24d, Stufen 24ab, 24ad und Abweisflächen 22 und 23 sind vergleichbar mit der Ausbildung, die bereits anhand des Futtermischers 1 beschrieben wurden, so dass diese nicht nochmals erläutert werden.

Auch die Abweisflächen 22, 23 des Ausführungsbeispieles nach Fig. 2 verhindern, dass Futter entgegen der bevorzugten Förderrichtungen F₁, F₂ von der mittleren Vertikalschnecke 7a an der Ausgabeöffnung 26 auf die weiter entfernt liegenden Vertikalschnecken 7b und 7d zurückgefördert werden.

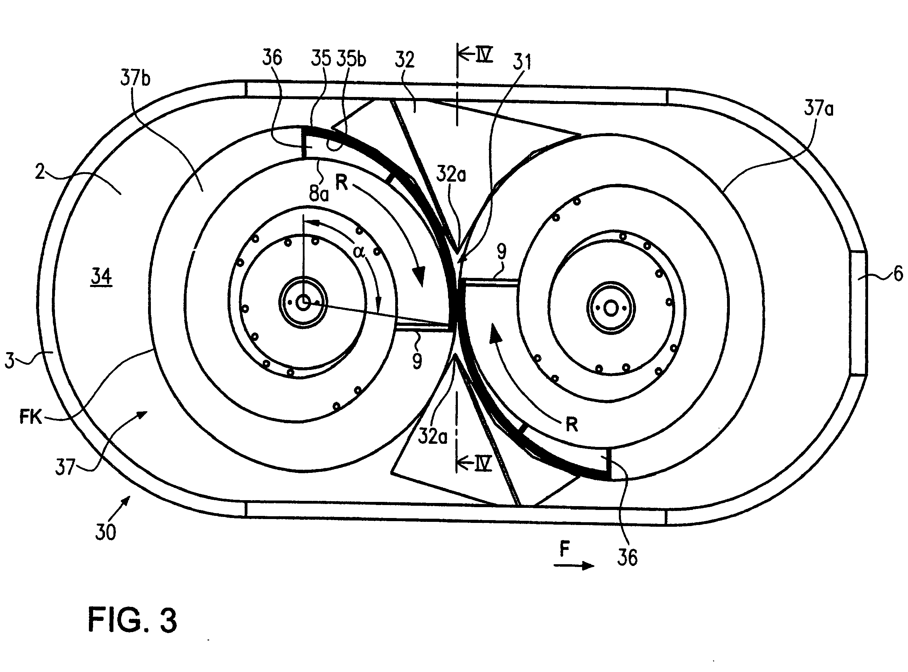

Anhand der Fig. 3 bis 5 wird ein weiteres Ausführungsprinzip der vorliegenden Erfindung erläutert. Fig. 3 zeigt eine Draufsicht auf einen schematisch dargestellten Futtermischer 30 mit Blick in das Innere der Mischkammer 2. Der Futtermischer 30 ist, ähnlich wie der Futtermischer 1, mit einer in Fahrtrichtung vom liegenden Futterausgabeöffnung 6 versehen. Die Mischkammer 2 ist in diesem Ausführungsbeispiel mit einem ebenen Boden 34 versehen, auf dem zwei Vertikalschnecken 37, die bis auf die nachfolgend beschriebenen Einzelheiten den Vertikalschnecken 7 entsprechen, angeordnet und rotierend angetrieben sind. Auch hier liegt eine erste Vertikalschnecke 37a in der Nähe der Futterausgabeöffnung 6 und eine zweite Vertikalschnecke 37b im hinteren Bereich der Mischkammer 2. Beide Vertikalschnecken 37a, 37b sind unmittelbar benachbart zueinander angeordnet, mit gleichsinniger Wendelrichtung ausgestattet und gleichsinnig angetrieben, so dass sie eine bevorzugte Förderrichtung F in Richtung auf die Ausgabeöffnung 6 definieren. Dabei sind in bekannter und beispielsweise im DE-U-200 12 862 beschriebenen Weise potentielle Toträume im Inneren der Mischkammer 2 durch Leitkörper 32 gefüllt, die so ausgebildet sind, dass sie die bevorzugte Förderrichtung F unterstützen. Die Leitkörper 32 reichen mit Spitzen 32a in den Zwickel zwischen den benachbarten Vertikalschnecken 37a und 37b am Boden 34 hinein und lassen einen Übergangsbereich 31 zwischen den Vertikalschnecken 37 frei, durch den Futter von einer Vertikalschnecke auf die benachbarte Vertikalschnecke übergeben werden kann.

Damit diese Übergabe im Wesentlichen nur in der bevorzugten Förderrichtung F geschieht, ist jede der Vertikalschnecken 37 mit einer Abweisfläche 33 verbunden, die an einer an der Vertikalschnecke 37 befestigten Schürze 35 angeordnet ist. Die Schürze 35 hat eine etwa dreieckige Form, beginnt an der Aufnahmekante 9 und erstreckt sich entgegen der Rotationsrichtung R nach hinten. Die Schürze 35 ist so befestigt, dass sich die Abweisfläche 33 im Wesentlichen senkrecht zum Boden 34 erstreckt. Die untere Kante 35a der Schürze 35 verläuft parallel und nahe zum Boden 34, während die obere Kante 35b mit der gleichen Steigung wie der Schneckengang 8 ansteigt.

Die Schürze 35 ist mit einem dem Radius des Flugkreises FK der Aufnahmekante 9 entsprechenden Radius gekrümmt und erstreckt sich über einen Winkelbereich α, der mindestens der Breite des Übergangsbereiches 31 zwischen den Spitzen 32a am Boden 34 entspricht. Im dargestellten Ausführungsbeispiel ist der Winkelbereich α größer als der Abstand zwischen den Spitzen 32a am Boden 34 und beträgt etwa 100°.

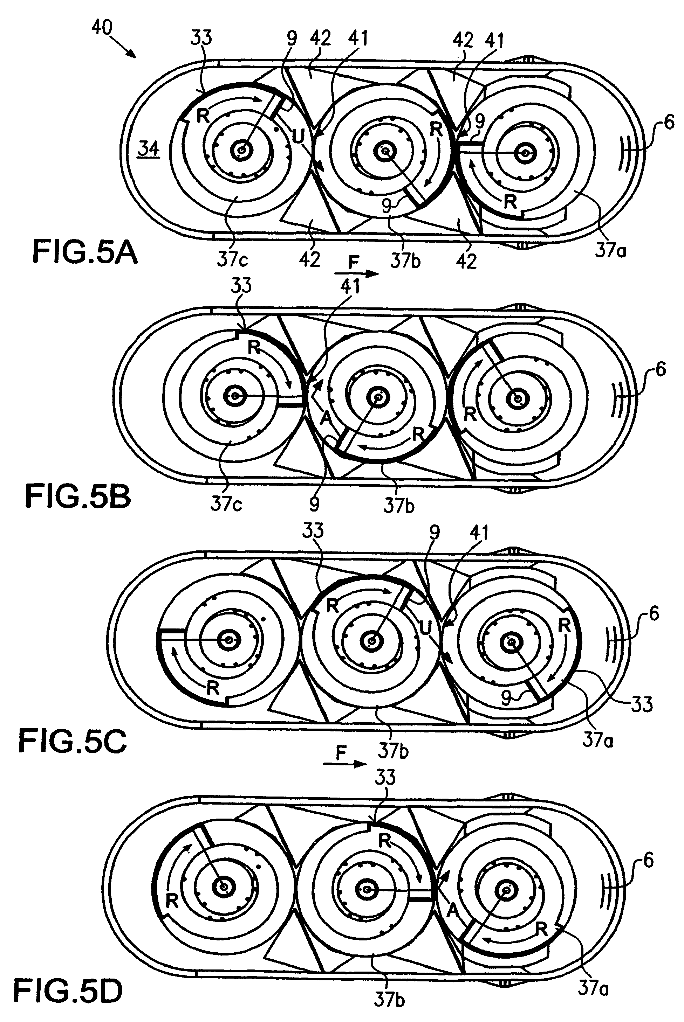

Durch die nach oben schmaler werdende Breite des Schneckenganges 8 tut sich zwischen der äußeren Umfangskante 8a des Schneckenganges 8 und der der Krümmung des Flugkreises FK folgenden, oberen Kante 35b der Schürze 35 ein zunehmend breiter werdender, radialer Spalt 36 auf, in den in üblicher Weise das durch die Zentrifugalkräfte und die schmaler werdende Breite des Schraubenganges 8 von oben abgeworfene Futter auf den Boden 34 fallen kann, so dass es von der Aufnahmekante 9 wieder aufgenommen und über den Schraubengang nach oben transportiert werden kann. Es ist jedoch auch möglich, insbesondere bei Schnecken mit geringerem Durchmesser, den Spalt zwischen der Außenkante 8a des Schneckengangs 8 und der oberen Kante 35b der Schürze 35 in geeigneter Weise durch ein Blech oder dergleichen abzudecken (s. auch Fig. 5).

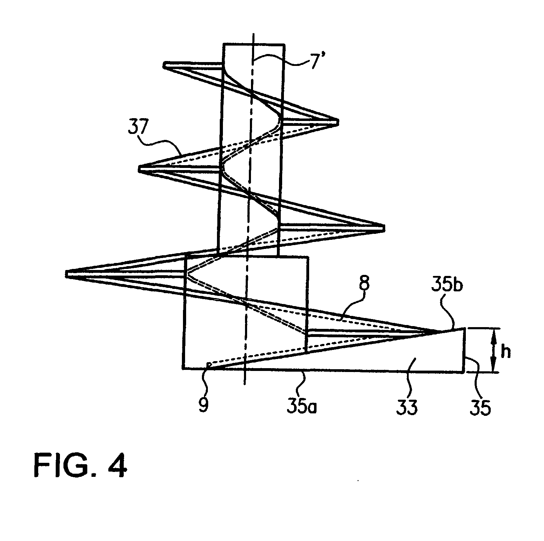

Bei diesem Futtermischer 30 ist es möglich, die Übergaberichtung von einer Vertikalschnecke 37 auf die benachbarte Vertikalschnecke 37 durch eine geeignete Synchronisation der Rotation der beiden Vertikalschnecken zu bestimmen und zu steuern. Das Kriterium dafür ist die Relativlage der Aufnahmekanten 9 der beiden Vertikalschnecken 37 zueinander. Die zweckmäßige Synchronisation wird nachfolgend anhand eines weiteren Ausführungsbeispiels eines Futtermischers 40 in den Fig. 5A bis 5D gezeigt. Der Futtermischer 40 entspricht etwa dem Futtermischer 30, weist jedoch drei der in Fig. 3 und 4 dargestellten, mit der Schürze 35 und der Abweisfläche 33 versehenen Vertikalschnecken 37 auf, die in Reihe hintereinander mit zunehmendem Abstand von der Ausgabeöffnung 6 auf einem ebenen Boden 34 angeordnet sind. Die Übergangsbereiche 41 zwischen benachbarten Vertikalschnecken werden analog zum Futtermischer 30 der Fig. 3 durch zweckmäßig ausgebildete Leitkörper bestimmt. Alle drei Vertikalschnecken 37a, 37b und 37c weisen die gleiche Wendelrichtung, die gleiche Rotationsrichtung R und bevorzugt die gleiche Rotationsgeschwindigkeit auf.

Die Winkellage der Aufnahmekanten 9 benachbarter Vertikalschnecken 37 zueinander wird jedoch wie folgt festgelegt.

Wie Fig. 5A zeigt, ist die Lage der Aufnahmekanten 9 und der damit verbundenen Abweisflächen 33 der Vertikalschnecken 37b und 37c zueinander so festgelegt, dass dann, wenn sich die Aufnahmekante 9 der hintersten Vertikalschnecke 37c dem Übergangsbereich 41 zur mittleren Vertikalschnecke 37b nähert, die Aufnahmekante 9 und die Abweisfläche 33 der mittleren Vertikalschnecke 37b den Übergangsbereich 41 freigibt, so dass das Futter, das die Aufnahmekante 9 der Schnecke 37c vor sich herschiebt, in Richtung des Pfeiles U auf den Schraubengang 8 bzw. unter den Schraubengang 8 im Bereich der mittleren Schnecke 37b geschoben wird; sich somit in bevorzugter Förderrichtung F bewegt.

Wie Fig. 5B zeigt, gelangt dann, wenn sich die Aufnahmekante 9 der mittleren Förderschnecke 37b dem Übergangsbereich 41 zur hinteren Schnecke 37c nähert, die Abweisfläche 33 der hinteren Schnecke 37c in den Übergangsbereich 41 und verschließt diesen zunehmend. Das von der Aufnahmekante 9 der mittleren Schnecke 37b vor sich hergeschobene Futter wird somit von der Abweisfläche 33 daran gehindert, zurück in den Bereich der hinteren Schnecke 37c geschoben zu werden, und bewegt sich in Abweisrichtung A; verbleibt somit im Bereich der mittleren Schnecke 37b.

In gleicher Weise wird, wie die Fig. 5C und 5D zeigen, die Rotation der ersten, der Ausgabeöffnung 6 am nächsten liegenden Vertikalschnecke 37a auf die Rotation der benachbarten, mittleren Vertikalschnecke 37b abgestimmt. Auch hier wird die Winkelposition der jeweiligen Aufnahmekanten 9 und der damit verbundenen Abweisflächen 33 so ausgewählt, dass die Abweiskante 9 der mittleren Vertikalschnecke 37b das Futter in Richtung des Pfeiles U auf die vordere Schnecke 37a übergeben kann, während der Übergangsbereich 41 zwischen der vorderen und der mittleren Schnecke 37a, 37b beim Durchgang der Aufnahmekante 9 der vorderen Schnecke 37a durch die Abweisfläche 33 der mittleren Schnecke 37b gesperrt ist.

Aus der vorstehenden Erläuterung ergibt sich, dass die der Ausgabeöffnung 6 am nächsten liegende Vertikalschnecke 37a bei der gewählten, bevorzugten Förderrichtung F nicht unbedingt mit der Abweisfläche 33 versehen werden muss, wenn es darum geht, die Förderung in der bevorzugten Förderrichtung F zu unterstützen.

Die Synchronisierung der Vertikalschnecken 37a bis 37c erfolgt bevorzugt mit einem Winkelversatz zwischen 30 und 90°, bevorzugt im Bereich von etwa 60°.

In Abwandlung der beschriebenen und gezeichneten Ausführungsbeispiele können die in den Figuren gezeigten und beschriebenen Einzelheiten untereinander ausgetauscht werden. So kann beispielsweise ein Futtermischer nach den Fig. 1 und 2 auch nur mit zwei Schnecken bestückt sein. In den Futtermischem der Fig. 1 und 2 können die gleichen Leitkörper vorgesehen werden, wie in den Futtermischern der Fig. 3 bis 5. Die Anordnung der Vertikalschnecken zueinander kann entsprechend der Lage der Futterausgabeöffnung variiert werden. Als Vertikalschnecken können weiterhin jede andere geeignete Art von Förderschnecken eingesetzt werden. Die Abweisflächen können an jeder Stelle im Übergangsbereich angeordnet werden, an denen sie die Förderung des Futters in eine bevorzugte Förderrichtung unterstützen. Es wäre beispielsweise denkbar, dass durch die jeweilige Förderschnecke ein Mechanismus betätigt wird, der die Futterübergabe in einer Richtung sperrt, sobald eine dafür empfängliche Relativlage der Schnecken erreicht wird.

## Patentansprüche

1. Futtermischer (1, 20, 30, 40), mit einer Mischkammer (2), die eine Futterausgabeöffnung (6,26) und einen Boden (4, 24, 34) aufweist, und mit mindestens zwei rotierend antreibbaren Vertikalschnecken (7, 37) zum Mischen des Futters und zum Bewegen des Futters in einer Förderrichtung (F) zur Futterausgabeöffnung (6, 26), wobei jede Vertikalschnecke (7, 37) mit jeweils einer Futter vom Boden (4, 24, 34) aufnehmenden Aufnahmekante (9) versehen ist, die einen auf den Boden (4, 24, 34) projizierten Flugkreis (FK) überstreicht, **gekennzeichnet durch** eine sich vom Boden (4,24,34) nach oben erstreckende und entgegen der Förderrichtung (F) wirksame Futter-Abweisfläche (12, 13, 22, 23, 33), die dem Flugkreis (FK) der Aufnahmekante (9) in einem Übergangsbereich (11, 21, 31) zwischen benachbarten Vertikalschnecken (7, 37) zugeordnet ist.

2. Futtermischer nach Anspruch 1, **dadurch gekennzeichnet, dass** die Abweisfläche (12, 13, 22, 23, 33) wenigstens dem Übergangsbereich (11, 21, 31) zwischen der der Futterausgabeöffnung (6, 26) am nächsten liegenden Vertikalschnecke (7a, 37a) und der benachbarten Vertikalschnecke (7b, 7d, 37b) zugeordnet ist.

3. Futtermischer nach Anspruch 1 oder 2, **dadurch gekennzeichnet, dass** die Abweisfläche (12, 13, 22, 23, 33) mit dem Radius des Flugkreises (FK) gekrümmt ist.

4. Futtermischer nach einem der Ansprüche 1 bis 3, **dadurch gekennzeichnet, dass** die Abweisfläche (12, 13, 22, 23, 33) eine Länge aufweist, die wenigstens der Länge des Übergangsbereichs (11, 21, 31) entspricht.

5. Futtermischer nach einem der Ansprüche 1 bis 4, **dadurch gekennzeichnet, dass** die Abweisfläche (12, 13, 22, 23, 33) sich über einen Winkelbereich des Flugkreises (FK) von 30 bis 180° erstreckt.

6. Futtermischer nach einem der Ansprüche 1 bis 5, **dadurch gekennzeichnet, dass** benachbarten Vertikalschnecken (7, 37) jeweils eine Abweisfläche (12, 13, 22, 23) zugeordnet ist.

7. Futtermischer nach einem der Ansprüche 1 bis 6, **dadurch gekennzeichnet, dass** die Abweisfläche (12, 13, 22, 23) durch eine Bodenstufe zwischen einer in einer höher und einer in einer tiefer liegenden Ebene (I, II, III) umlaufenden Aufnahmekante (9) ausgebildet ist.

8. Futtermischer nach Anspruch 7, **dadurch gekennzeichnet, dass** die Bodenstufe eine Höhe von 10cm bis 50cm aufweist.

9. Futtermischer nach Anspruch 7 oder 8, **dadurch gekennzeichnet, dass** die der Futterausgabeöffnung (6, 26) am nächsten liegende Aufnahmekante (9) in der am tiefsten liegenden Ebene (I) umläuft.

10. Futtermischer nach einem der Ansprüche 1 bis 6, **dadurch gekennzeichnet, dass** die Abweisfläche (33) mit der Aufnahmekante (9) verbunden ist.

11. Futtermischer nach Anspruch 10, **dadurch gekennzeichnet, dass** die Abweisfläche (33) an einer an der Aufnahmekante (9) beginnenden und dem Zwischenraum (h) zwischen einem sich an die Aufnahmekante (9) anschließenden Teil des Schneckengangs (8) und dem Boden (34) zugeordneten Schürze (35) angeordnet ist.

12. Futtermischer nach Anspruch 10 oder 11, **dadurch gekennzeichnet, dass** die Rotation der mit einer Abweisfläche (33) versehenen, ersten Vertikalschnecke so auf die Rotation der benachbarten zweiten Vertikalschnecke abgestimmt ist, dass die Abweisfläche (33) der ersten Vertikalschnecke den Übergangsbereich (31) verschließt, wenn sich die Aufnahmekante (9) der benachbarten Vertikalschnecke durch den Übergangsbereich (31) bewegt.

13. Futtermischer nach Anspruch 12, **dadurch gekennzeichnet, dass** die Rotation benachbarter Vertikalschnecken (37) um 30 bis 90°, bevorzugt 60°, versetzt zueinander erfolgt.

14. Futtermischer nach den Ansprüchen 10 bis 13, **dadurch gekennzeichnet, dass** in der Mischkammer (2) eine Mehrzahl gleichsinnig rotierend angetriebene Vertikalschnecken (37) in Reihe in Richtung auf die Futterausgabeöffnung (6) angeordnet sind, von denen jede mit jeweils einer Abweisfläche (33) versehen ist.

## Claims

1. A fodder mixer (1, 20, 30, 40) comprising a mixing chamber (2) having a fodder discharge opening (6, 26) and a bottom (4, 24, 34), and further comprising at least two vertical screws (7, 37), which are adapted to be rotatingly driven and which are used for mixing the fodder and for moving it in a feed direction (F) to the fodder discharge opening (6, 26), each vertical screw (7, 37) being provided with a pick-up edge (9) which picks up fodder from the bottom (4, 24, 34) and which sweeps over a flight circle (FK) projected onto said bottom (4, 24, 34), **characterized by** a fodder baffle surface (12, 13, 22, 23, 33) extending upwards from said bottom (4, 24, 34) and effective in a direction opposite to the feed direction (F), said fodder baffle surface (12, 13, 22, 23, 33) being associated with the flight circle (FK) of the pick-up edge (9) in a transition area (11, 21, 31) between neighbouring vertical screws (7, 37).

2. A fodder mixer according to claim 1, **characterized in that** the baffle surface (12, 13, 22, 23, 33) is associated at least with the transition area (11, 21, 31) between the vertical screw (7a, 37a) located closest to the fodder discharge opening (6, 26) and the neighbouring vertical screw (7b, 7d, 37b).

3. A fodder mixer according to claim 1 or 2, **characterized in that** the baffle surface (12, 13, 22, 23, 33) has a radius of curvature which corresponds to that of said flight circle (FK).

4. A fodder mixer according to one of the claims 1 to 3, **characterized in that** the baffle surface (12, 13, 22, 23, 33) has a length which corresponds at least to the length of the transition area (11, 21, 31).

5. A fodder mixer according to one of the claims 1 to 4, **characterized in that** the baffle surface (12, 13, 22, 23, 33) extends over an angular area of the flight circle (FK) of from 30 to 180°.

6. A fodder mixer according to one of the claims 1 to 5, **characterized in that** each of the neighbouring vertical screws (7, 37) has associated therewith a respective baffle surface (12, 13, 22, 23).

7. A fodder mixer according to one of the claims 1 to 6, **characterized in that** the baffle surface (12, 13, 22, 23) is defined by a respective step in the bottom between a pick-up edge (9) rotating on a higher level (II, III) and a pick-up edge (9) rotating on a lower level (I, II).

8. A fodder mixer according to claim 7, **characterized in that** the step in the bottom has a height of from 10 cm to 50 cm.

9. A fodder mixer according to claim 7 or 8, **characterized in that** the pick-up edge (9) located closest to the fodder discharge opening (6, 26) rotates on the lowest level (I).

10. A fodder mixer according to one of the claims 1 to 6, **characterized in that** the baffle surface (33) is connected to the pick-up edge (9).

11. A fodder mixer according to claim 10, **characterized in that** the baffle surface (33) is arranged on an apron (35) which starts at the pick-up edge (9) and which is associated with the space (h) between a part of the screw channel (8) bordering on said pick-up edge (9) and the bottom (34).

12. A fodder mixer according to claim 10 or 11, **characterized in that** the rotation of the first vertical screw provided with a baffle surface (33) is coordinated with the rotation of the neighbouring second vertical screw in such a way that the baffle surface (33) of the first vertical screw covers the transition area (31) when the pick-up edge (9) of the neighbouring vertical screw moves through said transition area (31).

13. A fodder mixer according to claim 12, **characterized in that** neighbouring vertical screws (37) rotate with a displacement of from 30 to 90°, preferably 60°, relative to one another.

14. A fodder mixer according to claims 10 to 13, **characterized in that** the mixing chamber (2) has arranged therein a plurality of vertical screws (37) which are rotatingly driven in the same direction and which are arranged in a row in the direction of the fodder discharge opening (6), each of said vertical screws (37) being provided with a baffle surface (33).

## Revendications

1. Appareil mélangeur de fourrage (1, 20, 30, 40) comprenant un compartiment de mélange (2), qui présente une ouverture de décharge de fourrage (6, 26) et un fond (4, 24, 34), et au moins deux vis verticales (7, 37) entraînables en rotation pour le mélange du fourrage et le déplacement du fourrage dans une direction de transport (F) vers l'ouverture de décharge de fourrage (6, 26), chaque vis verticale (7, 37) étant munie d'une arête de réception (9) recevant du fourrage du fond (4, 24, 34), qui balaye une orbite (FK) projetée sur le fond (4, 24, 34), **caractérisé par** une surface de refoulement du fourrage (12, 13, 22, 23, 33) s'étendant du fond (4, 24, 34) vers le haut et active à l'opposé du sens de transport (F), qui est associée à l'orbite (FK) de l'arête de réception (9) dans une zone de transfert (11, 21, 31) entre des vis verticales voisines (7, 37).

2. Appareil mélangeur de fourrage suivant la revendication 1, **caractérisé en ce que** la surface de refoulement (12, 13, 22, 23, 33) est associée à au moins la zone de transfert (11, 21, 31) entre la vis verticale (7a, 37a) la plus proche de l'ouverture de décharge de fourrage (6, 26) et la vis voisine (7b, 7d, 37b).

3. Appareil mélangeur de fourrage suivant l'une des revendications 1 et 2, **caractérisé en ce que** la surface de refoulement (12, 13, 22, 23, 33) est cintrée avec le rayon de l'orbite (FK).

4. Appareil mélangeur de fourrage suivant l'une des revendications 1 à 3, **caractérisé en ce que** la surface de refoulement (12, 13, 22, 23, 33) présente une longueur qui correspond au moins à la longueur de la zone de transfert (11, 21, 31).

5. Appareil mélangeur de fourrage suivant l'une des revendications 1 à 4, **caractérisé en ce que** la surface de refoulement (12, 13, 22, 23, 33) s'étend sur une plage angulaire de l'orbite (FK) de 30 à 180°.

6. Appareil mélangeur de fourrage suivant l'une des revendications 1 à 5, **caractérisé en ce qu'**une surface de refoulement (12, 13, 22, 23) est associée à chaque vis verticale voisine (7, 37).

7. Appareil mélangeur de fourrage suivant l'une des revendications 1 à 6, **caractérisé en ce que** la surface de refoulement (12, 13, 22, 23) est réalisée par un gradin de fond entre une arête de réception (9) tournant dans un plan situé plus haut et une arête de réception tournant dans un plan situé plus bas (I, II, III).

8. Appareil mélangeur de fourrage suivant la revendication 7, **caractérisé en ce que** le gradin de fond présente une hauteur de 10 cm à 50 cm.

9. Appareil mélangeur de fourrage suivant l'une des revendications 7 et 8, **caractérisé en ce que** l'arête de réception (9) la plus proche de l'ouverture de décharge du fourrage (6, 26) tourne dans le plan situé le plus bas (I).

10. Appareil mélangeur de fourrage suivant l'une des revendications 1 à 6, **caractérisé en ce que** la surface de refoulement (33) est reliée à l'arête de réception (9).

11. Appareil mélangeur de fourrage suivant la revendication 10, **caractérisé en ce que** la surface de refoulement (33) est disposée sur un tablier (35) qui commence sur l'arête de réception (9) et est associé à l'espace intermédiaire (h) compris entre une partie du filet de vis (8) contiguë à l'arête de réception (9) et le fond (34).

12. Appareil mélangeur de fourrage suivant l'une des revendications 10 et 11, **caractérisé en ce que** la rotation de la première vis verticale munie d'une surface de refoulement (33) est adaptée à la rotation de la seconde vis verticale voisine de sorte que la surface de refoulement (33) de la première vis verticale ferme la zone de transfert (31) lorsque l'arête de réception (9) de la vis verticale voisine se déplace au travers de la zone de transfert (31).

13. Appareil mélangeur de fourrage suivant la revendication 12, **caractérisé en ce que** la rotation de vis verticales voisines (37) s'effectue avec décalage mutuel de 30 à 90°, de préférence de 60°.

14. Appareil mélangeur de fourrage suivant les revendications 10 à 13, **caractérisé en ce qu'**une pluralité de vis verticales (37) entraînées en rotation dans le même sens est disposée en série dans le compartiment de mélange (2) en direction de l'ouverture de décharge de fourrage (6), dont chacune est munie d'une surface de refoulement (33).
